# EUROPEAN PATENT APPLICATION

(11) **EP 4 324 738 A1**
(43) Date of publication of application: **21.02.2024**
(21) Application number: 23190290.9
(22) Date of filing: 08.08.2023
(51) Int. Cl.: B64C 27/00, B64D 45/06

(54) **GROUND RESONANCE DETECTION AND WARNING SYSTEM AND METHOD**

(30) Priority: 16.08.2022 IN 202211046471; 03.10.2022 US 202217937608
(71) Applicant: Honeywell International Inc., Charlotte, NC 28202 (US)
(72) Inventor: POPESCU, Michael, Charlotte, 28202 (US); TALAPUREDDI, Murali Mohan, Charlotte, 28202 (US)
(74) Representative: Lucas, Peter Lawrence

(57) **Abstract**

A system and method for detecting ground resonance and providing a warning regarding the same includes supplying, from an inertial navigation system (INS), inertial data indicative of an inertial profile of a rotorcraft, and supplying, from a sensor system, sensor data that indicates when the rotorcraft is at least partially on a landing surface. The sensor data is processed, in a processing system, to determine when the rotorcraft is at least partially on the landing surface, and when the rotorcraft is determined to be at least partially on the landing surface, the inertial data is processed, in the processing system to determine when the inertial profile of the rotorcraft indicates ground resonance may occur. Upon determining that ground resonance may occur, one or more alert signals are generated in the processing system.

## Description

### CROSS-REFERENCE TO RELATED APPLICATION

This application claims priority to India Provisional Patent Application No. 202211046471, filed August 16, 2022, the entire content of which is incorporated by reference herein.

### TECHNICAL FIELD

The present invention generally relates to rotorcraft ground resonance, and more particularly relates to systems and methods for detecting ground resonance and providing warnings thereof.

### BACKGROUND

Ground resonance is a phenomenon that occurs when a rotorcraft, such as a helicopter, lands on one corner of the landing gear or with an asymmetric proportion of landing forces, thus causing an unbalanced centripetal force causing the rotor blades to rock out of phase and create an ever-increasing resonant vibration frequency on the entire helicopter. This tumultuous event applies the potential energy of the entire structure of the rotorcraft to create uncontrolled moments coming off of every major structure, potentially leading to the complete destruction of the rotorcraft. Although ground resonance is more likely to occur in rotorcraft equipped with lead-lag hinges, rotorcraft equipped with fully articulated rotor systems may also experience this phenomenon, though it is less likely.

When ground resonance occurs, or is imminent, the rotorcraft pilot needs to act quickly to prevent damage to the rotorcraft. For many pilots, the typical response to ground resonance is to power down the rotorcraft. However, powering down the rotorcraft will not reduce or solve ground resonance as the momentum and oscillation will continue to affect the rotorcraft. The more appropriate response is for the pilot to abandon the landing position and remove the rotorcraft from the ground to the hover position. At this point, the pilot can attempt a safe landing. Unfortunately, no warning system presently exists to assist pilots in taking this corrective action.

Hence, there is a need for a ground resonance detection and warning system that can detect an early onset of ground resonance and present pre-emptive and avoidance warnings to allow for manual correction or stopping ground resonance when it occurs without incurring major aircraft damage. The present disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a ground resonance detection and warning system includes an inertial navigation system (INS), a sensor system, and a processing system. The INS is configured to sense an inertial profile of a rotorcraft and supply inertial data indicative of the inertial profile. The sensor system is configured to detect when the rotorcraft is at least partially on a landing surface and supply sensor data indicative thereof. The processing system is coupled to receive the inertial data from the INS and the sensor data from the sensor system. The processing system is configured, upon receipt of the inertial data and the sensor data, to (i) determine when the rotorcraft is at least partially on the landing surface and (ii) when the rotorcraft is at least partially on the landing surface: process the inertial data to determine when the inertial profile of the rotorcraft indicates ground resonance may occur and, generate one or more alert signals upon determining that ground resonance may occur.

In another embodiment, a method for detecting ground resonance and providing a warning regarding the same includes supplying, from an inertial navigation system (INS), inertial data indicative of an inertial profile of a rotorcraft, and supplying, from a sensor system, sensor data that indicates when the rotorcraft is at least partially on a landing surface. The sensor data is processed, in a processing system, to determine when the rotorcraft is at least partially on the landing surface, and when the rotorcraft is determined to be at least partially on the landing surface, the inertial data is processed, in the processing system to determine when the inertial profile of the rotorcraft indicates ground resonance may occur. Upon determining that ground resonance may occur, one or more alert signals are generated in the processing system.

In yet another embodiment, a rotorcraft includes a fuselage and a ground resonance detection and warning system. The ground resonance detection and warning system is disposed at least partially within the fuselage and includes an inertial navigation system (INS), a sensor system, and a processing system. The INS is configured to sense an inertial profile of a rotorcraft and supply inertial data indicative of the inertial profile. The sensor system is configured to detect when the rotorcraft is at least partially on a landing surface and supply sensor data indicative thereof. The processing system is coupled to receive the inertial data from the INS and the sensor data from the sensor system. The processing system is configured, upon receipt of the inertial data and the sensor data, to (i) determine when the rotorcraft is at least partially on the landing surface and (ii) when the rotorcraft is at least partially on the landing surface: process the inertial data to determine when the inertial profile of the rotorcraft indicates ground resonance may occur and, generate one or more alert signals upon determining that ground resonance may occur.

Furthermore, other desirable features and characteristics of the ground resonance detection and warning system and method will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a functional block diagram of one embodiment of a ground resonance detection and warning system;
FIG. 2 depicts a side view of one example of a rotorcraft that may include a blade angle sensor that may be used with the system of FIG. 1; and
FIG. 3 depicts a method, in flowchart form, that may be implemented in the system of FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

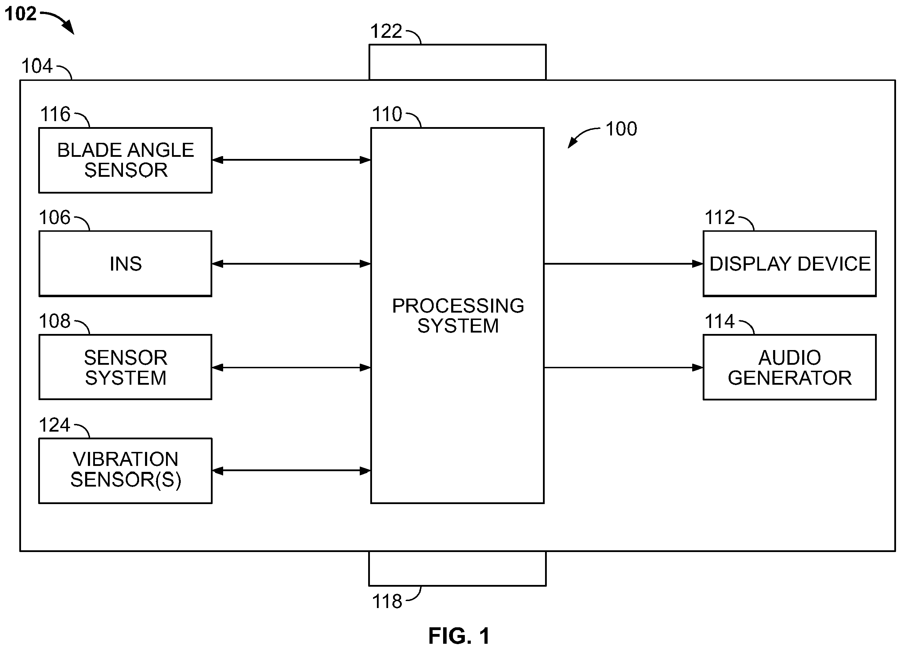

Referring to FIG. 1, a functional block diagram of one embodiment of a ground resonance detection and warning system 100 is depicted. The system 100 is preferably installed within a rotorcraft 102, and more particularly in or on a fuselage 104 of the rotorcraft 102, and includes at least an inertial navigation system (INS) 106, sensor system 108, and a processing system 110. The INS is configured to sense an inertial profile of the rotorcraft 102 and to supply inertial data indicative of the inertial profile. As is generally known, the INS 106 detects the attitude - pitch, yaw, and roll - of the rotorcraft 102. Thus, the inertial data indicative of the inertial profile includes data indicative of the attitude of the rotorcraft 102.

The sensor system 108 is configured to detect when the rotorcraft 102 is at least partially on a landing surface and supply sensor data indicative thereof. The sensor system 108 may be implemented using any one of numerous known sensor systems for detecting when the rotorcraft 102 is at least partially on a landing surface. For example, the sensor system 108 may be implemented using an altimeter, such as a radio altimeter, a barometric altimeter, or a laser altimeter. In other embodiments, the sensor system 108 may be implemented using any one of numerous known weight-on-wheels (WOW) sensor systems.

The processing system 110 generally represents the hardware, circuitry, processing logic, and/or other components configured to facilitate communications and/or interaction between the elements of the system 100 and perform additional processes, tasks and/or functions to support operation of the system 100, as described in greater detail below. Depending on the embodiment, the processing system 110 may be implemented or realized with a general-purpose processor, a controller, a microprocessor, a microcontroller, a content addressable memory, a digital signal processor, an application specific integrated circuit, a field programmable gate array, any suitable programmable logic device, discrete gate or transistor logic, processing core, discrete hardware components, or any combination thereof, designed to perform the functions described herein. In practice, the processing system 110 includes processing logic that may be configured to carry out the functions, techniques, and processing tasks associated with the operation of the system 100 described in greater detail herein. Furthermore, the steps of a method or algorithm described in connection with the embodiments disclosed herein may be embodied directly in hardware, in firmware, in a software module executed by the processing system 110, or in any practical combination thereof. In accordance with one or more embodiments, the processing system 110 includes or otherwise accesses a data storage element, such as a memory (e.g., RAM memory, ROM memory, flash memory, registers, a hard disk, or the like) or another suitable non-transitory short or long term storage media capable of storing computer-executable programming instructions or other data for execution that, when read and executed by the processing system 110, cause the processing system 110 to execute and perform one or more of the processes, tasks, operations, and/or functions described herein.

With the above in mind, it is noted that the processing system 110 is coupled to receive the inertial data from the INS 106 and the sensor data from the sensor system 108. The processing system 110 is configured, upon receipt of the inertial data and the sensor data, to determine when the rotorcraft 102 is at least partially on a landing surface. When the processing system 110 determines that the rotorcraft 102 is at least partially on the landing surface, the processing system 110 is further configured to process the inertial data to determine when the inertial profile of the rotorcraft 102 indicates ground resonance may occur. If, based on the inertial profile of the rotorcraft 102, the processing system 110 determines that ground resonance may occur, the processing system 110 will generate one or more alert signals. It should be noted that processing the inertial data to determine when the inertial profile of the rotorcraft 102 indicates ground resonance may occur only when the rotorcraft 102 is at least partially on a landing surface will prevent any false determinations of ground resonance.

It will be appreciated that the processing system 110 may be a stand-alone system or it may be part of one of the avionic systems disposed within the rotorcraft 102. It may also, in some embodiments, be part of a portable computing device. If the processing system 110 comprises one of the avionic systems, it may comprise any one of numerous avionic systems such as, for example, a flight management system (FMS), a flight control system (FCS), or a weather radar system. In one particular embodiment, however, the processing system 110 comprises an enhanced ground proximity warning system (EGPWS). If the processing system 110 comprises a portable computing device, it may comprise an electronic flight bag (EFB), a tablet, or smartphone.

Regardless of how the processing system 110 is specifically implemented, the one or more alert signals may include display command signals and/or audio commands. When the one or more alert signals include display command signals, it will be appreciated that the system 100 will additionally include at least one display device 112. The display device 112, which may be implemented using any one of numerous known display technologies, is coupled to receive the display command signals and is configured, upon receipt of the display command signal, to render textual response instructions. The textual response instructions may be, for example, instructions that provide exit guidance to the pilot. For example, the textual response instructions may instruct the pilot to avoid the landing and instead increase engine speed and return to a hover position, or to power down the engine and exit the rotor craft.

When the one or more alert signals include audio commands, it will be appreciated that the system 100 will additionally include at least one audio generator 114. The audio generator 114, which may be implemented using any one of numerous known audio generating devices, is coupled to receive the audio command signals and is configured, upon receipt of the audio command signals, to emit an audible alert. The audible alert may be, for example, audible instructions similar to the above-described textual response instructions, such as "Ground Resonance - Go to Hover". In addition, if the processing system 110 determines, based upon the inertial data, that the ground resonance is likely to occur when the collective is down, the audible instructions may include instructions such as, for example, "Brace!" and/or "Evacuate!".

As FIG. 1 further depicts, the system 100 may additionally include, at least in some embodiments, a blade angle sensor 116. The blade angle sensor 116, when included is configured to detect a separation angle between the rotors of the rotorcraft 102 and to supply blade angle sensor data representative of the separation angle. In these embodiments, the processing system 110 is further coupled to receive the blade angle sensor data and is further configured, upon receipt of the blade angle sensor data, to determine when the separation angle is less than a predetermined magnitude. As may be appreciated, the predetermined magnitude may vary from rotorcraft type to rotorcraft type, but is selected as a magnitude that, based on actual data, indicates ground resonance is likely to occur or is occurring.

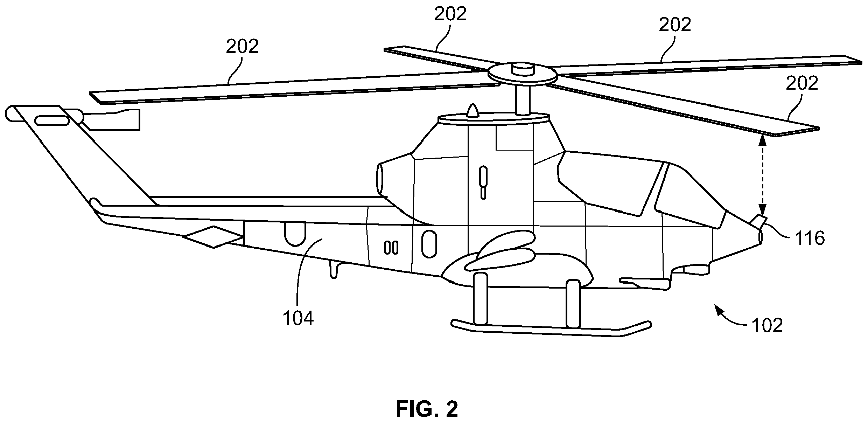

It will be appreciated that the blade angle sensor 116 may be implemented using any one of numerous types of sensors. In one particular embodiment, which is depicted in FIG. 2, the blade angle sensor 116 is implemented using an optical sensor that is mounted, for example, on the front (or nose) of the fuselage 104. The optical sensor 116 is aimed upward to readily detect the separation angle of the rotor blades 202.

In addition to detecting and providing ground resonance warning, the system 100 may be configured to monitor the health of certain portions of the rotorcraft. More specifically, the system 100 may be configured to monitor the health of the landing gear dampeners 118 and/or the rotor head shock absorbers 122. To do so, and as FIG. 1 further depicts, the system 100 may additionally include one or more vibration sensors 124. The one or more vibration sensors 124, which may be separate from, or part of, the INS 106, are configured to sense vibrations of the rotorcraft 102 and supply vibration data representative thereof.

In these embodiments, the processing system 110 is further coupled to receive the vibration data and is further configured to track the vibrations of the rotorcraft 102 during each take-off and landing maneuver. When the tracked vibrations exceed a predetermined threshold, the processing system 110 is further configured to generate a warning signal indicating that the performance of the landing gear dampeners 118 has degraded to a point requiring maintenance.

As noted above, the processing system 110 may also be configured, in at least some embodiments, to determine the health state of the one or more rotor shock absorbers 122. To do so, the processing system 110 is further configured to track the blade angle sensor data over time to detect deterioration.

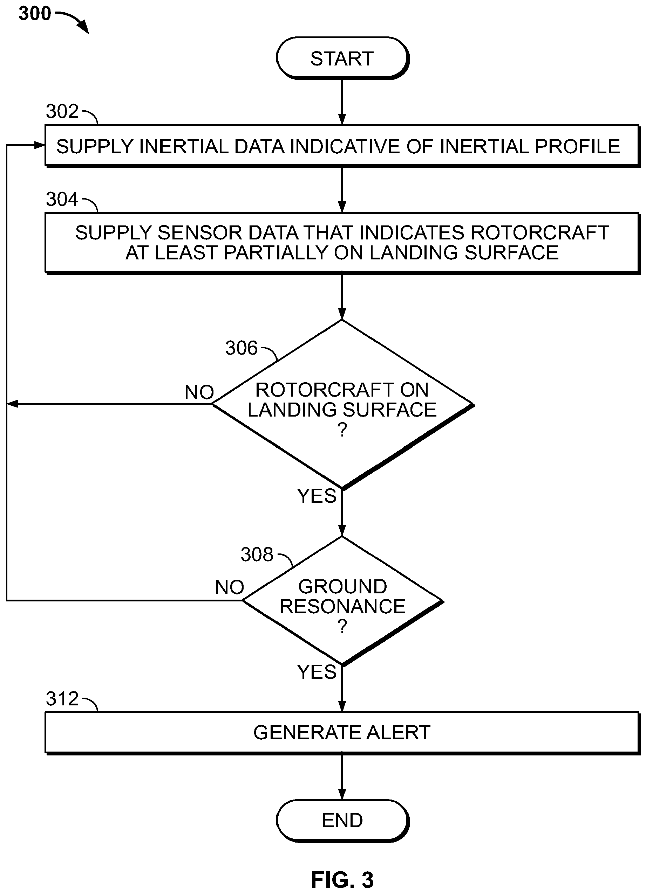

Having described the overall functionality of the system 100, a description of a method for detecting ground resonance and providing a warning that is implemented in the system 100 will be described. The method 300, which is depicted in flowchart form in FIG. 3, represents various embodiments of a method for for detecting ground resonance and providing a warning. For illustrative purposes, the following description of method 300 may refer to elements mentioned above in connection with FIG. 1. In practice, portions of method 300 may be performed by different components of the described system 100. It should be appreciated that method 300 may include any number of additional or alternative tasks, the tasks shown in FIG. 3 need not be performed in the illustrated order, and method 300 may be incorporated into a more comprehensive procedure or method having additional functionality not described in detail herein. Moreover, one or more of the tasks shown in FIG. 3 could be omitted from an embodiment of the method 300 if the intended overall functionality remains intact.

The method 300 starts by supplying, from the inertial navigation system (INS) 106, inertial data indicative of the inertial profile of a rotorcraft 102 (302) and supplying, from the sensor system 108, sensor data that indicates when the rotorcraft 102 is at least partially on a landing surface (304). The processing system 110 then processes the sensor data to determine when the rotorcraft 102 is at least partially on the landing surface (306). When the rotorcraft is not determined to be at least partially on the landing surface, the method returns to step (302). However, when the rotorcraft is determined to be at least partially on the landing surface, the processing system 110 processes the inertial data to determine when the inertial profile of the rotorcraft indicates ground resonance may occur (308). When the inertial profile of rotorcraft does not indicate ground resonance may occur, the method returns to step (302). However, upon determining that ground resonance may occur, one or more alert signals are generated in the processing system 110 (312).

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A ground resonance detection and warning system, comprising:
an inertial navigation system (INS) configured to sense an inertial profile of a rotorcraft and supply inertial data indicative of the inertial profile;
a sensor system configured to detect when the rotorcraft is at least partially on a landing surface and supply sensor data indicative thereof; and
a processing system coupled to receive the inertial data from the INS and the sensor data from the sensor system, the processing system configured, upon receipt of the inertial data and the sensor data, to (i) determine when the rotorcraft is at least partially on the landing surface and (ii) when the rotorcraft is at least partially on the landing surface:
process the inertial data to determine when the inertial profile of the rotorcraft indicates ground resonance may occur and,
generate one or more alert signals upon determining that ground resonance may occur.

2. The system of claim 1, wherein the processing system comprises an avionic system.

3. The system of claim 2, wherein the avionic system comprises an enhanced ground proximity warning system (EGPWS).

4. The system of claim 1, wherein:
the one or more alert signals include display command signals; and
the system further comprises a display device coupled to receive the display command signals and configured, upon receipt thereof, to render textual response instructions.

5. The system of claim 1, wherein:
the one or more alert signals include audio commands; and
the system further comprises an audio generator coupled to receive the audio command signals and configured, upon receipt thereof, to emit an audible alert.

6. The system of claim 1, further comprising:
a blade angle sensor configured to detect a separation angle between rotors of the rotorcraft and supply blade angle sensor data representative of the separation angle,
wherein the processing system is further coupled to receive the blade angle sensor data and is further configured, upon receipt of the blade angle sensor data, to determine when the separation angle is less than a predetermined magnitude.

7. The system of claim 6, wherein the blade angle sensor comprises an optical sensor.

8. The system of claim 6, wherein:
the rotorcraft further comprises one or more rotor blade shock absorbers; and
the processing system is further configured to process the blade angle sensor data to determine a health state of the one or more rotor blade shock absorbers.

9. The system of claim 1, wherein the sensor system comprises a radio altimeter.

10. The system of claim 1, wherein the sensor system comprises one or more weight-on-wheels (WOW) sensors.

11. The system of claim 1, further comprising:
one or more vibration sensors, the one or more vibration sensors configured to sense vibrations of the rotorcraft and supply vibration data representative thereof,
wherein:
the rotorcraft further comprises landing gear dampeners, and
the processing system is further coupled to receive the vibration data and is further configured to:
track vibrations of the rotorcraft during take-off and landing maneuvers, and
when the tracked vibrations exceed a predetermined threshold vibration, generate a warning signal indicating that performance of the landing gear dampeners has degraded to a point requiring maintenance.

12. A method for detecting ground resonance and providing a warning regarding the same, the method comprising the steps of:
supplying, from an inertial navigation system (INS), inertial data indicative of an inertial profile of a rotorcraft;
supplying, from a sensor system, sensor data that indicates when the rotorcraft is at least partially on a landing surface; and
processing, in a processing system, the sensor data to determine when the rotorcraft is at least partially on the landing surface;
when the rotorcraft is determined to be at least partially on the landing surface, processing the inertial data, in the processing system to determine when the inertial profile of the rotorcraft indicates ground resonance may occur; and
upon determining that ground resonance may occur, generating, in the processing system, one or more alert signals.

13. The method of claim 12 further comprising rendering, on a display device, textual response instructions.

14. The method of claim 12, further comprising generating, with an audio generator, an audible alert.

15. The method of claim 12, further comprising:
supplying, with a blade angle sensor, blade angle sensor data indicative of a separation angle between rotors of the rotorcraft;
processing, in the processing system, the blade angle sensor data to determine when the separation angle is less than a predetermined magnitude and to determine a health state of the one or more rotor blade shock absorbers.
